# EUROPÄISCHE PATENTSCHRIFT

(11) **EP 2 702 284 B1**
(45) Veröffentlichungstag und Bekanntmachung des Hinweises auf die Patenterteilung: **15.03.2017**
(21) Anmeldenummer: 12715675.0
(22) Anmeldetag: 12.04.2012
(51) Int. Cl.: F16C 19/52, F16C 41/00, C23F 13/06, C23F 13/10, F16C 33/78, F16C 19/54, F16C 19/16

(54) **LAGER MIT KORROSIONSGESCHÜTZTEM LAGERTEIL**
BEARING WITH COMPONENT PROTECTED AGAINST CORROSION
PALIER COMPRENANT PARTIE PROTÉGÉ CONTRE LA CORROSION

(30) Priorität: 29.04.2011 DE 102011017776
(43) Veröffentlichungstag der Anmeldung: 05.03.2014
(73) Patentinhaber: Schaeffler Technologies AG & Co. KG, 91074 Herzogenaurach (DE)
(72) Erfinder: KIRCHHOFF, Nico, 97525 Schwebheim (DE); SCHULTE-NÖLLE, Christian, 96052 Bamberg (DE); LOESCHE, Thomas, 97537 Wipfeld (DE); MÜLLER, Claus, 90542 Eckental (DE)
(86) Internationale Anmeldenummer: PCT/EP2012/056633
(87) Internationale Veröffentlichungsnummer: WO 2012/146485

(56) Entgegenhaltungen:
- DE-A1- 2 019 377
- DE-A1-102008 035 717
- DE-A1-102008 048 412
- DE-B- 1 253 994
- US-A1- 2005 078 897

## Beschreibung

### Gebiet der Erfindung

Die Erfindung betrifft ein Lager nach dem Oberbegriff von Anspruch 1.

Aus der Praxis sind Lager, insbesondere Wälz- oder Gleitlager, bekannt, die in einer stark elektrochemisch korrosivem Umgebung, insbesondere in elektrisch leitenden, insbesondere wässrigen Fluiden wie beispielsweise Meerwasser, Prozesswasser, Abwasser, Reinigungsflüssigkeiten oder Kühlschmierstoff auf Wasserbasis, eingesetzt werden. Ein angemessener Korrosionsschutz spielt für Lagerteile derartiger Lager eine besondere Rolle. Die Erfindung wird im folgenden insbesondere mit Bezug auf Meerwasser als elektrisch leitendes korrosives Fluid beschrieben, es versteht sich jedoch, dass auch ein anderes elektrisch leitendes Fluid, insbesondere ein elektrisch leitendes Fluid auf Wasserbasis, vorgesehen sein kann.

DE 10 2008 048 412 A1 beschreibt ein Lager, speziell ein Wälzlager, mit einem als Lagerring ausgebildetem Lagerteil, wobei an dem Lagerring als kathodische Korrosionsschutzvorrichtung eine Opferanode angeordnet ist. Das Material der Opferanode ist bezogen auf das Material des Lagerrings elektrochemisch weniger edel, so dass sich ein elektrisch kurzgeschlosse nes galvanisches Kontaktelement zwischen der Opferanode und dem Material des Lagerrings ausbildet, wobei die Opferanode anstelle des Lagerrings sich auflöst. Ungünstig ist, dass das Material der Opferanode nach einiger Zeit verbraucht ist, so dass der kathodische Korrosionsschutz nur für eine begrenzte Zeit besteht. Ungünstig ist weiter, dass der kathodische Korrosionsschutz nur in unmittelbarer Nähe der Opferanode besteht; ein Schutz größerer Flächen setzt eine großflächige Beschichtung bzw. eine massereiche Opferanode voraus, wobei sich die großflächige Beschichtung bzw. die massereiche Opferanode jedoch nur ungleichmäßig auflöst. Nachteilig ist ferner, dass an dem Lagerteil, insbesondere dem Lagerring, bauliche Änderungen vorzunehmen sind, um die Opferanode anzubringen, insbesondere dann, wenn die Opferanode großfläche bzw. massereich ausgestaltet ist.
JP 2007056926 AA (Abstract) beschreibt ein Radlager mit einer Sensoreinheit und einer Montagehalterung für die Sensoreinheit an dem Radlager, wobei die Montagehalterung durch eine Schicht oder eine Anodenmasse als Opferanode gegen Korrosion geschützt ist.
JP 2002106588 AA (Abstract) beschreibt ein Lager mit einem Käfig in einer alkalischen korrosiven Umgebung, wobei an einem Endabschnitt des Käfigs eine galvanische Beschichtung als Opferanode angebracht ist.
US 2005/0078897 A1 beschreibt ein Lager, in dessen Innenseiten metallische Schichten als Opferanoden angeordnet sind.
WO 01/33091 A1 beschreibt ein Lager mit einer DLC-Beschichtung als Korrosionsschutz.
Die DE 1253994 B1 offenbart die Merkmale des Oberbegriffs des Anspruchs 1.

### Aufgabe der Erfindung

Es ist die Aufgabe der Erfindung, ein Lager mit einer dauerhaften, einstellbaren und nur geringe bauliche Änderungen erfordernden Korrosionsschutzvorrichtung anzugeben.

### Zusammenfassung der Erfindung

Diese Aufgabe wird erfindungsgemäß für das eingangs genannte Lager gemäß Anspruch 1 dadurch gelöst, dass der Lagerring, als Kathode einer Fremdstromquelle geschaltet ist, und dass die Anode der Fremdstromquelle gegenüber dem Lagerteil, insbesondere dem Lagerring, beabstandet angeordnet ist.

Die Erfindung wird im folgenden unter Bezugnahme auf ein als Lagerring ausgebildetes, also Kathode der Fremdstromquelle geschaltetes, Lagerteil näher beschrieben und erläutert, wobei es sich versteht, dass auch andere Lagerteile wie Lagerdeckel, Wälzkörper oder Käfige eines Wälzlagers oder Führungsringe als Lagerteile vorgesehen sein können.

Der Lagerring ist dabei mit dem kathodischen Pol der Fremdstromquelle elektrisch leitend verbunden. Weiter ist eine Anode vorgesehen, die keinen unmittelbaren elektrisch leitenden Berührkontakt mit dem Lagerring aufweist, wobei die Anode mit dem anodischen Pol der Fremdstromquelle verbunden ist. Die Fremdstromquelle bewirkt eine Potentialdifferenz an der Grenzfläche des Lagerrings zu dem umgebenden elektrolytischen Medium, insbesondere dem Meerwasser, wobei die Potentialdifferenz vom Betrag her dem elektrochemischen Potential entspricht, das die korrosive Auflösung des Material des Lagerrings bewirkt. Im Idealfall liefert die Fremdstromquelle gerade keinen Strom, so dass sich die Fremdstromquelle teils selbst-regelnd betrieben werden kann, oder alternativ hierzu mittels einer Regelung angesteuert und geregelt werden kann.

Das erfindungsgemäße Lager bietet den Vorteil, den für den kathodischen Schutz des Lagerrings erforderlichen Schutzstrom kurzfristig anpassen zu können, um Temperaturänderungen oder der Strömungsgeschwindigkeit bzw. Änderungen der chemischen Zusammensetzung des Elektrolyten ausgleichen zu können. Die Fremdstromquelle selbst sowie die Anode verbrauchen sich nicht, so dass ein dauerhafter Korrosionsschutz des Lagerrings möglich ist, der insbesondere nicht mit einem nennenswerten Materialverbrauch verbunden ist. Die Erfindung bietet den weiteren Vorteil, an Lagerteilen, insbesondere Lagerringen eines Wälz- oder Gleitlagers, einen Korrosionsschutz vorzusehen, ohne wesentliche bauliche Änderungen an den Lagerteilen vornehmen zu müssen. Bei Wälzlagern lässt sich insbesondere auch die überrollten Laufbahnen bzw. bei Gleitlagern die im Gleitkontakt befindlichen Gleitflächen gegen Korrosion schützen; insbesondere lässt sich mittels eines einzelnen elektrischen Kontaktes zu dem kathodischen Pol der Fremdstromquelle der gesamten Lagerring, also sowohl dessen Mantel als auch Stirnflächen einschließlich der Laufbahnen für die Wälzkörper, gegen Korrosion schützen. Der Korrosionsschutz ist unabhängig von der Größe des Lagerteils und damit entsprechend skalierbar. Weiter wird die Möglichkeit der Werkstoffauswahl sowohl für das Lagerteil, speziell den Lagerring, als auch für die Anode nur wenig eingeschränkt, sofern das als Kathode geschaltete Lagerteil elektrisch leitend und die Anode elektrisch leitend und korrosionsbeständig ausgestaltet sind.

Die Fremdstromquelle kann an dem Lager selbst, beispielsweise unmittelbar in das Lager oder das zu schützende Lagerteil baulich integriert, oder aber in größerer räumlicher Entfernung zu dem Lager angeordnet sein.

Vorzugsweise ist vorgesehen, dass die Fremdstromquelle eine auch bei Stillstand der Welle ununterbrochene Stromversorgung umfasst. Die auch bei Stillstand der Welle ununterbrochene Stromversorgung bietet den Vorteil, auch bei Stillstand des Lagers die Fremdstromquelle versorgen zu können, da auch bei Stillstand des Lagers die Gefahr einer Korrosion des Lagerrings besteht. Die Stromversorgung kann beispielsweise eine Batterie umfassen. Die Batterie kann dabei als wiederaufladbare Batterie (Akkumulator) vorgesehen sein und bietet den Vorteil, eine energetisch im wesentlichen autarke Spannungsquelle bereitzustellen, die unabhängig von der Einbausituation des Lagers ist. Alternativ zu einer Batterie bzw. zu einem Akkumulator kann vorgesehen sein, dem Lager mittels eines Generators Energie zu entziehen, die die Fremdstromquelle beaufschlagt. Alternativ zu einer Batterie oder einem anderen Speicher elektrischer Energie kann als Stromversorgung ein Generator, beispielsweise ein Solarkollektor oder eine Brennstoffzelle, vorgesehen sein. Das Lager selbst kann als Generatorlager ausgebildet sein, um aus der gegenseitigen Drehung der Lagerringe elektrische Energie zu gewinnen, und einen Stromspeicher umfassen, der bei Stillstand des Lagers die Stromversorgung aufrechterhält.

Erfindungsgemäß ist vorgesehen, dass die Anode als Ringanode ausgebildet ist, die an einem Trägerring angeordnet ist. Die ringförmige Ausbildung der Anode als Ringanode bietet den Vorteil, ein im wesentlichen homogenes Feld zu dem annähernd kreisringförmigen Lagerring auszubilden, so dass Spitzenladungen vermeidbar sind, an denen sich sonst Partikel ablagern könnten.

Besonders bevorzugt ist hinsichtlich der Anordnung der Ringanode vorgesehen, dass jeder der beiden Stirnseiten des Lagerrings gegenüberliegend je eine Ringanode angeordnet ist, so dass ein homogenes elektrisches Feld durch den Elektrolyten hinweg zu dem als Kathode geschalteten Lagerring ausgebildet wird. Der Trägerring hält die Ringanode beabstandet nicht nur von dem als Kathode geschalteten Lagerteil, also insbesondere dem Lagerring, sondern auch von weiteren Bestandteilen der das Lager aufnehmenden Lagerung, beispielsweise von einer in dem Lager gelagerten Welle oder einer Lageraufnahme, in der das Lager feststehend angeordnet ist. Ein Trägerring kann eine einzelne Ringanode aufnehmen, beispielsweise mittig entlang der Mantelfläche des Trägerrings, oder mehrere Ringanoden, beispielsweise zwei Ringanoden, die an den beiden gegenüberliegenden Stirnflächen des Trägerrings angeordnet sind. Die Ringanoden weisen jedenfalls einen Kontakt zu dem Elektrolyten auf, mit dem auch das als Kathode geschaltete Lagerteil in Kontakt steht, sind jedoch elektrisch gegenüber ande ren Teilen der Lageranordnung isoliert.

Vorzugsweise ist hinsichtlich der Ringanode vorgesehen, dass die Ringanode aus oxidbeschichtetem Titan gebildet ist. Die Ringanode ist dabei als Inertanode ausgebildet, die auch in der anodischen Schaltung korrosionsbeständig ausgebildet ist, beispielsweise also in Meerwasser als Elektrolyten nicht korrodiert. Das Titan der Anode weist eine Beschichtung aus einem Mischoxid auf, das elektrochemisch edle Metalle wie Platin bzw. Ruthenium enthält.

Alternativ zu der Ausbildung der Anode als Ringanode ist vorzugsweise vorgesehen, dass die Anode als Siebanode ausgebildet ist. Die Siebanode umfasst dabei ein perforiertes, im wesentlichen ebenes Blech. Alternativ kann die Siebanode ein flaches Gewebe oder Gespinst aus einem elektrisch leitenden Material umfassen. Unabhängig von der konkreten Ausgestaltung der Siebanode hat diese die Wirkung, die Strömung des Elektrolyten durch das Lager zu begrenzen und Partikel von dem Lager fernzuhalten. Die Siebanode unterdrückt das Auftreten von Turbulenzen in dem Lager und vermeidet das Auftreten von Spitzenspannungen, an denen Korrosion ansetzen könnte.

Vorzugsweise ist vorgesehen, dass eine Referenzelektrode vorgesehen ist. Die Referenzelektrode ermöglicht die Bestimmung des tatsächlichen elektrochemischen Potentials an der Oberfläche des als Kathode geschalteten Lagerteils und damit die Feststellung, ob das tatsächlich vorhandene elektrochemische Potential den Wert von Null Volt aufweist bzw. gegen einen Wert von ca. Null Volt tendiert. Das tatsächliche elektrochemische Potential kann von einem Sollwert beispielsweise aufgrund von Temperaturschwankungen in dem Lagerteil bzw. in dem Elektrolyten abweichen. Ebenso ist vorstellbar, dass die Leitfähigkeit des Elektrolyten, bei Meerwasser beispielsweise der Salzgehalt, zeitlich veränderlich ist. Das aufgrund der Referenzelektrode ermittelte tatsächliche elektrochemische Potential an der Oberfläche des als Kathode geschalteten Lagerteils dient als Regelgröße einer Regelung der Fremdstromquelle, so dass der Fremdstrom derart eingestellt wird, dass an der Oberfläche des Lagerteils das elektrochemische Potential zu jeder Zeit verschwindet und dabei einen Wert von ca. Null Volt aufweist. Die Referenzelektrode ist in räumlicher Nähe zu dem als Kathode geschalteten Lagerteil angeordnet, beispielsweise an einer Lageraufnahme nahe dem als Kathode geschalteten Lagerring angebracht.

Vorzugsweise ist vorgesehen, dass das Lagerteil eine elektrisch isolierende Schicht aufweist. Die elektrisch isolierende Schicht des als Kathode geschalteten Lagerteils stellt insbesondere in Zusammenhang mit der Referenzelektrode sicher, dass der mittels der Referenzelektrode gewonnene Messwert ausschließlich das elektrochemische Potential an der Oberfläche des zu schützenden Lagerteils wiedergibt, so dass Störeinflüsse weiterer elektrochemischer Potentiale, beispielsweise an der Welle oder gegenüber der Lageraufnahme, keinen Einfluss auf die Steuerung des Schutzstromes der Fremdstromquelle nehmen können. Die elektrisch isolierende Schicht kann als Beschichtung auf dem Material des als Kathode geschalteten Lagerteils ausgebildet sein, oder aber durch eine Hülse, die an dem Lagerteil befestigt ist.

Vorzugsweise ist vorgesehen, dass das Lagerteil, insbesondere der Lagerring, mit einem weiteren Lagerteil, insbesondere einem weiteren Lagerring, elektrisch leitend verbunden ist. Die beiden Lagerteile, insbesondere die beiden Lagerringe, lassen sich gemeinsam als Kathode schalten und damit auch gemeinsam gegen Korrosion schützen. Die elektrisch leitende Verbindung der beiden Lagerteile kann bei einem Wälzlager mit elektrisch nicht leitenden, beispielsweise keramischen, Wälzkörpern durch ein Kontaktelement, beispielsweise einen länglichen, formstabilen Kontaktstift, ausgebildet sein, der den Außenring mit dem Innenring verbindet.

Vorzugsweise ist vorgesehen, dass mit dem Lagerteil, insbesondere dem Lagerring, eine Opferanode in elektrisch leitenden Kontakt verbunden ist. Die Opferanode übernimmt den kathodischen Schutz für den Fall, dass die Fremdstromquelle beispielsweise wartungsbedingt außer Betrieb ist.

Vorzugsweise ist vorgesehen, dass das Lagerteil, insbesondere der Lagerring, eine korrosionshemmende Beschichtung aufweist. Die korrosionshemmende Beschichtung stellt einen Korrosionsschutz für den Fall sicher, dass die Fremdstromquelle kurzfristig außer Betrieb gesetzt ist.

Weitere Vorteile und Merkmale ergeben sich aus den abhängigen Ansprüchen sowie aus der folgenden Beschreibung eines bevorzugten Ausführungsbeispiels der Erfindung.

Die Erfindung wird im folgenden unter Bezugnahme auf die anliegenden Zeichnungen näher beschrieben und erläutert.

### Kurze Beschreibung der Zeichnungen

- Fig. 1: zeigt schematisch eine teilweise geschnittene Darstellung eines ersten Ausführungsbeispiels eines erfindungsgemäßen Lagers,
- Fig. 2: zeigt schematisch eine teilweise geschnittene Darstellung eines zweiten Ausführungsbeispiels eines erfindungsgemäßen Lagers,
- Fig. 3: zeigt schematisch eine teilweise geschnittene Darstellung eines dritten Ausführungsbeispiels eines erfindungsgemäßen Lagers,
- Fig. 4: zeigt schematisch eine teilweise geschnittene Darstellung eines vierten Ausführungsbeispiels eines erfindungsgemäßen Lagers, und
- Fig. 5: zeigt ausschnittsweise eine Anode als Teil eines fünften Ausführungsbeispiels eines erfindungsgemäßen Lagers.

### Detaillierte Beschreibung der Zeichnung

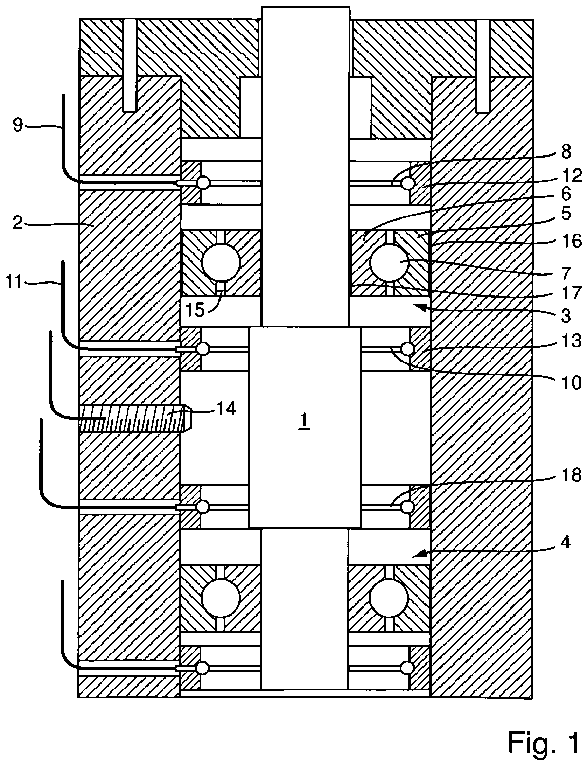

Fig. 1 zeigt eine Lageranordnung zur drehbaren Lagerung einer Welle 1 an einem Gehäuse 2, wobei die Lageranordnung ein erstes Lager 3 und ein axial, in Richtung der Erstreckung der Welle 1, beabstandetes zweites Lager 4 umfasst. Beide Lager 3, 4 sind gleichartig ausgebildet, so dass im folgenden zunächst nur das erste Lager 3 näher beschrieben werden soll.

Das Lager 3 ist als Wälzlager ausgebildet und umfasst als ersten Lagerring 5 einen Außenring 5, der an dem Gehäuse 2 befestigt ist, als zweiten Lagerring einen Innenring 6, der an der Welle 1 befestigt ist, sowie Wälzkörper 7 aus einem keramischen Material. Der Außenring 5 und der Innenring 6 bilden dabei die beiden Lagerringe 5, 6 des Wälzlagers 3.

Das Lager 3 umfasst weiter eine aktive kathodische Korrosionsschutzvorrichtung. Als Teil der kathodischen Korrosionsschutzvorrichtung ist der erste Lagerring 5 als Kathode einer Fremdstromquelle geschaltet, insbesondere ist der erste Lagerring 5 elektrisch leitend mit dem kathodischen Pol der Fremdstromquelle verbunden. Als weiteren Teil der kathodischen Korrosionsschutzvorrichtung umfasst die Fremdstromquelle eine Anode 8, die von dem als Kathode geschalteten ersten Lagerring 5 in axialer Richtung räumlich beabstandet angeordnet ist. Zwischen der Anode 8 und dem als Kathode geschalteten ersten Lagerring 5 befindet sich ein Elektrolyt, der sowohl mit der Anode 8 als auch mit der Kathode, nämlich dem ersten Lagerring 5, in Kontakt steht, so dass über den Elektrolyten ein Ladungsausgleich zwischen der Kathode und der Anode 8 möglich ist. Die Anode 8 ist über eine elektrisch leitende Verbindung 9 mit dem anodischen Pol der Fremdstromquelle verbunden. Zusätzlich zu der ersten Anode 8 ist eine zweite Anode 10 vorgesehen, die der ersten Anode 8 bezogen auf den Lagerring 5 gegenüberliegend angeordnet ist. Die zweite Anode 10 ist mit einer zweiten elektrisch leitenden Verbindung 11 mit dem anodischen Pol der Fremdstromquelle verbunden.

Die Anoden 8, 10 sind jeweils als Ringanoden ausgebildet, die die Welle 1 konzentrisch umlaufen und den jeweiligen Stirnflächen des ersten Lagerrings 5 gegenüberliegen. Die Ringanoden 8, 10 sind an einem Trägerring 12, 13 angeordnet, insbesondere an der inneren Mantelfläche des Trägerrings 12, axial mittig, ausgebildet, wobei der Trägerring 12, 13 mit der äußeren Mantelfläche an dem Gehäuse 2 befestigt ist. Die Ringanoden 8, 10 halten einen radialen Abstand zu der Welle 1 ein, wobei die elektrisch leitenden Verbindungen 9, 11 der Anoden 8, 10 zu dem anodischen Pol der Fremdstromquelle durch den jeweiligen Trägerring 12, 13 geführt ist.

Die Anoden 8, 10 sind aus Titan ausgebildet, das von einer oxidischen Beschichtung aus einem Mischoxid bedeckt ist. Das Mischoxid enthält Edelmetalle wie Platin und Ruthenium, so dass die Anoden 8, 10 in dem vorgesehenen Elektrolyten (Meerwasser) nicht korrodieren.

Die bildlich nicht dargestellte Fremdstromquelle umfasst eine Batterie, deren kathodischer Pol mit der Kathode, also dem ersten Lagerring 5, und deren anodischer Pol mit der Anode, also den Ringanoden 8, 10 elektrisch leitend verbunden ist. Die Batterie der Fremdstromquelle ist in dem Gehäuse 2 in der Nähe des ersten Lagers 3 angeordnet. Die Fremdstromquelle umfasst weiter eine Regelungs-Einheit, die den Strom der Fremdstromquelle derartig einstellt und nachführt, dass an der Kontaktfläche der Kathode, also des ersten Lagerrings 5 zu dem Elektrolyten (Meerwasser) ein elektrochemisches Potential mit einem Betrag von ca. Null Volt aufrechterhalten wird, so dass das Material des ersten Lagerrings 5 (Wälzlagerstahl) nicht in Lösung geht, also nicht korrodieren kann.

Das Lager umfasst weiter eine Referenzelektrode 14, der gegenüber das elektrochemische Potential des als Kathode geschalteten ersten Lagerrings 5 gemessen wird. Das Ergebnis der Messung ist Eingangsgröße für die Steuer-Regelung der Fremdstromquelle, die ggf. den Schutzstrom anpasst.

Der als Kathode geschaltete erste Lagerteil, nämlich der erste Lagerring 5, ist elektrisch leitend mit einem weiteren, zweiten Lagerteil, nämlich dem zweiten Lagerring 6, verbunden, so dass beiden Lagerteile, nämlich der Innenring 6 und der Außenring 5 des ersten Lagers 3, gemeinsam als Kathode geschaltet sind und gemeinsam durch die Fremdstromquelle kathodisch gegen Korrosion geschützt sind. Die elektrisch leitende Verbindung der beiden Lagerteile 5, 6 wird durch ein Kontaktelement, nämlich einen länglichen, formstabilen Kontaktstift 15 aus Graphit, hergestellt und aufrechterhalten, wobei der Kontaktstift 15 einen Schleifkontakt zwischen den beiden Lagerringen 5, 6 herstellt und aufrechterhält.

Der erste Lagerring 5 weist eine elektrisch isolierende Schicht 16 an der äußeren Mantelfläche auf, so dass ein Stromfluss zu dem Gehäuse 2 unterdrückt wird. Die Schicht 16 ist dabei als Beschichtung der äußeren Mantelfläche ausgebildet. Der zweite Lagerring 6 weist eine elektrisch isolierende Schicht 17 an der inneren Mantelfläche auf, so dass ein Stromfluss zu der Welle 1 unterdrückt wird, wobei die Schicht 17 ebenfalls als Beschichtung ausgebildet ist. Als Material für die jeweilige isolierende Schicht 16, 17 ist beispielsweise eine Keramik, ein Polymer wie PEEK oder PTFE (Teflon), ein Lack auf Polymerbasis oder ein Polymer-haltiger Verbundwerkstoff wie ein glasfaserverstärkter Kunststoff vorgesehen. Möglich ist auch ein technisches Glas als Material für die elektrisch isolierende Schicht. Die elektrisch isolierenden Schichten 16, 17 stellen sicher, dass die Referenzelektrode 14 ausschließlich das Potential der als Kathode geschalteten beiden Lagerringe 5, 6 erfasst und andere störende elektrochemische Potentiale, beispielsweise an der Oberfläche der Welle 1 bzw. des Gehäuses 2, keinen Einfluss auf den Schutzstrom erhalten, den die Fremdstromquelle liefert.

Die Stirnflächen der beiden als Kathode geschalteten Lagerringe 5, 6 sowie die Flächen zu beiden Seiten der Laufbahn der Wälzkörper 7 sind mit dem Material einer Opferanode aus einem gegenüber Wälzlagerstahl elektrochemisch weniger edlen Material, wie Zink, Aluminium oder Magnesium, bedeckt, dass bei einem Ausfallen der Fremdstromquelle einen zeitlich begrenzten kathodischen Schutz für die Lagerringe 5, 6 bereitstellt.

Das zweite Lager 4 der Lageranordnung umfasst ebenfalls zwei Ringanoden in jeweils einem Trägerring zu den beiden Seiten des Lagers, so dass die beiden Lager 3, 4 mit insgesamt vier Ringanoden versehen sind. Die dem zweiten Lager 4 zugeordneten Ringanoden können mit der Fremdstromquelle verbunden sein, mit der die Ringanoden 8, 10 des ersten Lagers 3 verbunden sind, so dass beiden Lagern 3, 4 eine gemeinsame Fremdstromquelle zugeordnet ist. Die Referenzelektrode 14 ist mittig zwischen den Lagern 3, 4 angeordnet, insbesondere mittig zwischen zweiten Ringanode 10 des ersten Lagers 3 und der dieser benachbarten ersten Ringanode 18 des zweiten Lagers 4, und dient als gemeinsame Referenzelektrode für beide Lager 3, 4.

Bei der nachfolgenden Beschreibung der weiteren Ausführungsbeispiele bezeichnen gleiche Bezugsziffern gleiche oder in der technischen Funktion vergleichbare Merkmale. Es sollen insbesondere die Unterschiede zu dem ersten Ausführungsbeispiel herausgestellt werden.

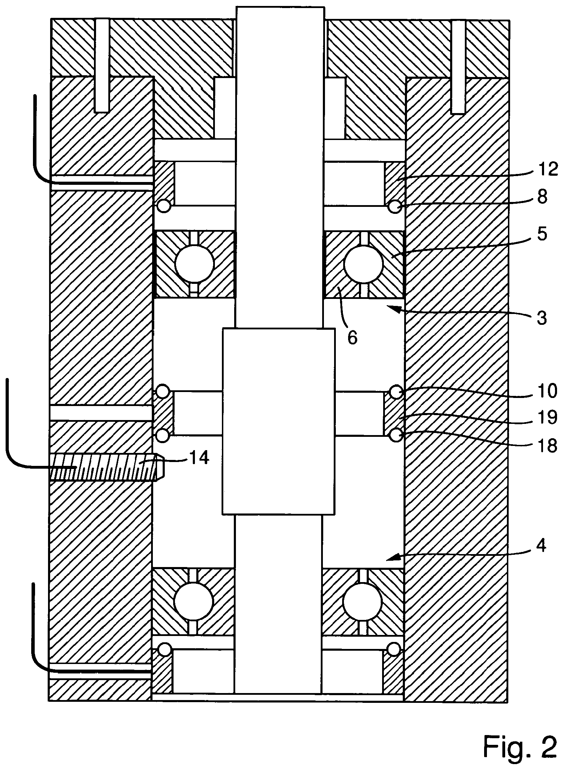

Fig. 2 zeigt eine Lageranordnung mit zwei Lagern 3, 4, wobei die jeweiligen Lagerringe 5, 6 als gemeinsame Kathode der Fremdstromquelle geschaltet sind. Die Anode 8 der Fremdstromquelle ist als Ringanode ausgebildet, allerdings in einer Stirnseite des Trägerrings 12 angeordnet. Zwischen den beiden Lagern 3, 4 ist ein gemeinsamer Trägerring 19 vorgesehen, an dessen erster Stirnseite die zweite Anode 10 des ersten Lagers 3 und an dessen zweiter Stirnseite die erste Anode 18 des zweiten Lagers 4 angeordnet ist. Eine zweite Anode des zweiten Lagers 4 ist ebenfalls in einer Stirnseite eines weiteren Trägerrings angeordnet. Der gemeinsame Trägerring 19 ist im wesentlichen mittig zwischen den beiden Lagern 3, 4 angeordnet.

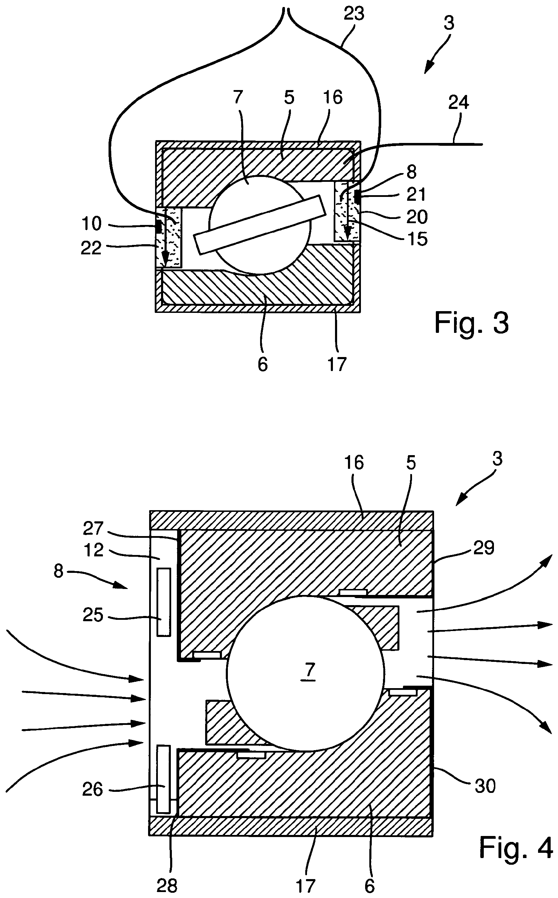

Fig. 3 zeigt ein als Wälzlager ausgebildetes Lager 3 mit einem ersten Lagerring 4, der als Außenring ausgebildet ist, und einem zweiten Lagerring 5, der als Innenring ausgebildet ist, sowie mit Wälzkörpern 7 aus einen nicht-leitenden Material. Die Stirnflächen und die Mantelflächen jedes der beiden Lagerringe 5, 6 sind mit einer elektrisch isolierenden Schicht 16, 17 versehen, so dass der erste Lagerring 4 auch mit den beiden Stirnflächen an einer elektrisch leitenden Anschlusskonstruktion, beispielsweise einem Abschnitt eines nicht dargestellten Gehäuses, anliegen kann und der zweite Lagerring ebenfalls mit den Stirnflächen an einer Kante einer Welle anliegen kann.

Der erste Lagerring 5 als erstes Lagerteil ist als Kathode einer nicht dargestellten Fremdstromquelle geschaltet. Der zweite Lagerring 6 als weiteres, zweites Lagerteil des Lagers 3 ist mit dem ersten Lagerring 5 elektrisch leitend verbunden, wobei ein gegenüber dem umgebenden Elektrolyten elektrisch isoliertes Kontaktelement aus einem elektrisch leitenden Material, speziell ein länglicher, formstabiler Kontaktstift 15 aus Graphit, vorgesehen ist, so dass das Kontaktelement einen Schleifkontakt zwischen dem ersten Lagerring 5 und dem zweiten Lagerring 6 ausbildet. Der Kontaktstift 15 ist in einem Dichtelement 20 angeordnet, das an dem ersten Lagerring 5 fest angebracht ist und gegenüber dem zweiten Lagerring 6 einen Dichtspalt einhält. Der Kontaktstift 15 durchsetzt den Dichtspalt und berührt die innere Mantelfläche des zweiten Lagerrings 6. Im Bereich des Dichtelementes 20 ist der Kontaktstift 15 beispielsweise durch Kohlefasern bzw. ein metallisches Gewebe ausgebildet bzw. verstärkt, wobei die Kohlefasern bzw. das metallische Gewebe in dem elektrisch nicht-leitenden, formstabilen Material des Dichtelementes 20 aufgenommen sind. In dem Dichtelement 20 ist an einer nach außen weisenden Ringnut 21 die kreisringförmige, flache Anode 8 aufgenommen, die als gemeinsame Anode für die beiden Lagerringe 5, 6 vorgesehen ist. Die Ringanode 8 weist dabei einen Kontakt mit einem umgebenden Elektrolyten, in diesem Fall ebenfalls Meerwasser, auf. In diesem Fall ist die Ringanode 8 zwischen den beiden als Kathode geschalteten Lagerringen 5, 6 angeordnet, wobei das Dichtelement 20 zusätzlich zu der Funktion des Aufnehmens und Haltens der Ringanode 8 noch die Funktion einer Dichtung sowie die Funktion einer Halterung für den Kontaktstift 15 übernimmt.

Zusätzlich zu dem in Fig. 3 mit dem Bezugszeichen '20' ausgewiesenen ersten Dichtelement 20 ist an der gegenüberliegenden Stirnfläche ein weiteres, zweites Dichtelement 22 angeordnet, das die zweite Ringanode 10 in einer weiteren Ringnut aufnimmt sowie einen weiteren, bildlich nicht dargestellten Kontaktstift aufnimmt. Das Lager 3 umfasst weiter eine bildlich nicht dargestellte Referenzelektrode. Die beiden Ringanoden 8, 10 sind durch eine gemeinsame elektrisch leitende Verbindung 23 mit dem anodischen Pol der Fremdstromquelle verbunden, wobei die Verbindung 23 zu dem anodischen Pol außen um die elektrisch isolierende Schicht 16 des ersten Lagerrings 5 geführt ist. Der erste Lagerring 5 ist mittels einer elektrisch leitenden Verbindung 24 mit dem kathodischen Pol der Fremdstromquelle verbunden.

Die Dichtelemente 20, 22 haben zusätzlich zu der Funktion, die Ringanoden 8, 10 aufzunehmen, die Wirkung, die Strömung des elektrisch leitenden Elektrolyten, nämlich des Meerwassers, in dem Lager 3 zu vergleichmäßigen, also Schwankungen der Strömungsgeschwindigkeit in dem Lager 3 auszugleichen und den Aufwand der Regelung der Fremdstromquelle der Kathode zu reduzieren. Diese Wirkung tritt auch für den Fall auf, dass die Dichtelemente 20, 20 nicht die Ringanoden 8, 10 aufnehmen.

Bei dem in Fig. 3 dargestellten Ausführungsbeispiel war vorgesehen, dass die Ringanoden 8, 10 an der nach außen, vom dem Wälzkörper 7 fort weisenden Flächen der Dichtelemente 20, 22 angeordnet sind. Es versteht sich, dass mindestens eine der Ringanoden 8, 10 an der nach innen, auf den Wälzkörper 7 weisenden Seite eines der Dichtelemente 20, 22 vorgesehen sein kann.

Fig. 4 zeigt ein Lager 3, das als erstes Lagerteil einen als Außenring ausgebildeten ersten Lagerring 5 und als zweites Lagerteil einen als Innenring ausgebildeten zweiten Lagerring 6 umfasst. Die beiden Lagerringe 5, 6 sind elektrisch leitend verbunden und gemeinsam als Kathode einer Fremdstromquelle geschaltet. Das Lager 3 umfasst weiter eine Anode 8, die in einem ringscheibenförmigen Trägerring 12 aufgenommen ist. Der Trägerring 12 liegt dabei auf den Stirnflächen der beiden Lagerringe 5, 6 jeweils auf.

Die Anode 8 umfasst eine erste Teilanode 25, die der Stirnfläche des ersten Lagerrings 5 gegenüberliegt, und eine zweite Teilanode 26, die der Stirnfläche des zweiten Lagerrings 6 gegenüberliegt. Die beiden Teilanoden 25, 26 sind in jeweils einer Ringnut in dem elektrisch nicht-leitenden Material des Trägerrings 12 aufgenommen, wobei die jeweilige Ringnut an der von der jeweiligen Stirnfläche fort weisenden Seite des Trägerrings 12 offen ist, so dass die Teilanoden 25, 26 in Kontakt mit dem Elektrolyten (Meerwasser) kommen können.

Die beiden Teilanoden 25, 26 sind miteinander elektrisch leitend verbunden, so dass sich insgesamt die Anode 8 ausbildet.

Die äußere Mantelfläche des ersten Lagerrings 5 weist eine elektrisch isolierende Schicht 16 auf, die durch eine Hülse ausgebildet ist, die an der Mantelfläche befestigt ist. Die Hülse steht dabei über die Stirnfläche des ersten Lagerrings 5 über und übergreift den Trägerring 12 seitlich, so dass die Mantelfläche des ringscheibenförmigen Trägerrings 12 die Schicht 16 berührt.

Die innere Mantelfläche des zweiten Lagerrings 6 weist eine elektrisch isolierende Schicht 17 auf, die ebenfalls durch eine Hülse gebildet wird, die an der inneren Mantelfläche befestigt ist. Auch die Schicht 17 steht über die Stirnfläche des zweiten Lagerrings 6 soweit über, dass der Trägerring 12 seitlich abgestützt und umgriffen wird.

Zwischen dem ringscheibenförmigen Trägerring 12 und den beiden Stirnflächen der beiden Lagerringe 5, 6 ist jeweils eine elektrisch isolierende Schicht 27, 28 angeordnet, die die Isolierung der Anode 8 gegenüber den als Kathode geschalteten beiden Lagerringen 5, 6 verbessert und insoweit die isolierenden Wirkung des elektrisch isolierenden Materials des Trägerrings 12 verstärkt.

Der Trägerring 12 ist abschnittsweise unterbrochen, um ein Eintreten eines Mediums, nämlich des Meerwassers oder eines anderen, elektrisch leitenden Elektrolyten, insbesondere eines wässrigen Elektrolyten, in den Bereich zwischen den beiden Lagerringen 5, 6 zu ermöglichen.

An den dem Trägerring 12 gegenüberliegenden Stirnseiten der Lagerringe 5, 6 sowie abschnittsweise an den inneren Mantelflächen der Lagerringe 5, 6, in einem Abstand zu der Laufbahn der Wälzkörper 7, ist eine korrosionshemmende Beschichtung 29, 30 beispielsweise aus einem Lack aufgebracht. Das Lager 3 umfasst neben der korrosionshemmenden Beschichtung 29, 30 Opferanoden, deren eine mit dem Bezugszeichen '31' ausgewiesen ist, wobei die Opferanoden 31 unmittelbar seitlich zu der Laufbahn der Wälzkörper 7 angeordnet sind als Schicht auf dem elektrisch leitenden Lagerring 5, 6 aufgebracht sind. Die Opferanoden 31 können auch die Gestalt eines Bandes, Drahtes oder Rings aufweisen und seitlich neben der Laufbahn montiert sein.

In Fig. 4 ist nur ein einzelner Trägerring 12 für die erste Anode 8 gezeigt. Es versteht sich, dass ein weiterer Trägerring auf der gegenüberliegenden Stirnseite der beiden Lagerringe 5, 6 vorgesehen sein kann. In Fig. 4 war ein gemeinsamer Trägerring 12 für die beiden Teilanoden 25, 26 der ersten Anode 8 vorgesehen, wobei der gemeinsame Trägerring 12 an dem ersten Lagerring 5 befestigt war. Es versteht sich, dass für jede der beiden Teilanoden 25, 26 ein eigener Trägerring vorgesehen sein kann, so dass der eine der beiden Trägerringe auf der Stirnfläche des ersten Lagerrings 5 und der andere der beiden Trägerringe auf der Stirnfläche des zweiten Lagerrings 6 aufliegt.

Bei den vorstehend beschriebenen Ausführungsbeispielen war die Anode 8, 10 jeweils als Ringanode ausgebildet, also als Korpus mit einer kreisringförmigen Gestalt.

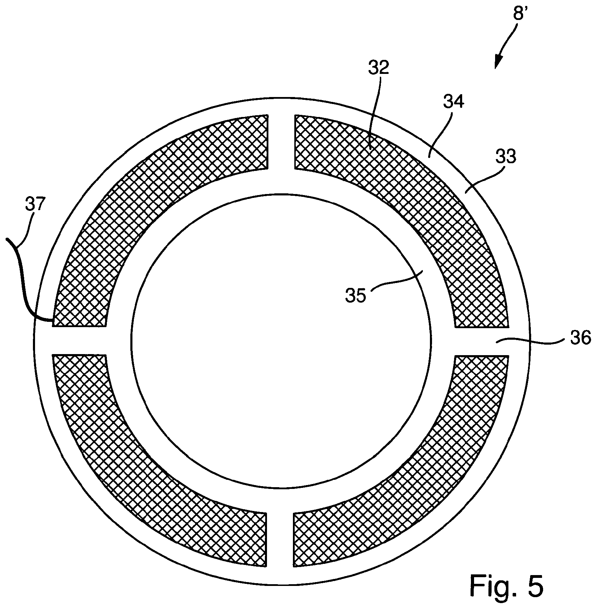

Fig. 5 zeigt eine als Siebanode ausgebildete Anode 8, die Teil eines weiteren Ausführungsbeispiels eines nicht dargestellten Lagers ist. Die Siebanode 8' umfasst ein kreisringförmiges perforiertes Blech 32 in einem Halter 33, wobei der Halter 33 einen äußeren Haltering 34 und einen inneren Haltering 35 aufweist, zwischen denen das kreisringförmige Blech 32 aufgenommen ist. Die beiden Halteringe 34, 35 sind mittels vier Stegen 36 untereinander verbunden, die oberhalb bzw. unterhalb des Blechs 32 ausgebildet sind. Die Halteringe 34, 35 sowie die Stege 36 bestehen aus einem nicht-leitenden Material, beispielsweise einem Kunststoff oder einer Keramik.

Das Blech 32 überdeckt den Abstand zwischen den beiden Lagerringen des Lagers, dabei sind die Halteringe 34, 35 an den Stirnflächen der Lagerringe befestigt. Das Blech 32 ist mittels einer elektrisch leitenden Verbindung 37 mit dem anodischen Pol der Fremdstromquelle verbunden.

Bei dem vorstehend beschriebenen ersten Ausführungsbeispiel (Fig. 1) war vorgesehen, dass die Fremdstromquelle an dem Gehäuse 2 befestigt ist, und dass eine elektrisch leitende Verbindung zwischen dem Außenring 5 und dem Innenring 6 ausgebildet ist. Der Innenring 6 war gegenüber der Welle 1 durch die Isolierung 17 elektrisch isoliert ausgebildet. Es versteht sich, dass die Fremdstromquelle mit der Welle 1 elektrisch leitend verbunden sein kann, wobei die Welle 1 gegenüber dem umgebenden Elektrolyten isoliert ist, und dass die Isolierung zwischen der Welle 1 und dem Innenring 6 mindestens abschnittsweise unterbrochen ist. Zwischen dem Innenring 6 und dem Außenring 5 ist dann eine elektrisch leitende Kontaktierung vorgesehen.

### Bezugszeichenliste

- 1: Welle
- 2: Gehäuse
- 3: erstes Lager
- 4: zweites Lager
- 5: Außenring
- 6: Innenring
- 7: Wälzkörper
- 8, 8': (erste) Anode
- 9: Verbindung der (ersten) Anode
- 10: (zweite) Anode
- 11: Verbindung der (zweiten) Anode
- 12: Trägerring der ersten Anode 8
- 13: Trägerring der zweiten Anode 10
- 14: Referenzelektrode
- 15: Kontaktstift
- 16: isolierende Schicht des ersten Lagerrings 5
- 17: isolierende Schicht des zweiten Lagerrings 6
- 18: (erste) Anode des zweiten Lagers 4
- 19: gemeinsamer Trägerring
- 20: Dichtelement
- 21: Ringnut
- 22: weiteres Dichtelement
- 23: gemeinsame Verbindung der Anoden 8, 10
- 24: elektrisch leitende Verbindung der Kathode
- 25: erste Teilanode
- 26: zweite Teilanode
- 27: isolierende Schicht
- 28: isolierende Schicht
- 29: korrosionshemmende Beschichtung
- 30: korrosionshemmende Beschichtung
- 31: Opferanode
- 32: perforiertes Blech
- 33: Halter
- 34: innerer Haltering
- 35: äußerer Haltering
- 36: Steg
- 37: leitende Verbindung

## Patentansprüche

1. Lager, umfassend einen Lagerring (5, 6) mit einer kathodischen Korrosionsschutzvorrichtung,
**dadurch gekennzeichnet,**
**dass** der Lagerring (5, 6) als Kathode einer Fremdstromquelle geschaltet ist, und
**dass** die Anode (8, 10) der Fremdstromquelle gegenüber dem Lagerring (5, 6) beabstandet angeordnet ist, und
**dass** die Anode (8, 10) als Ringanode ausgebildet ist, die an einem Trägerring (12, 13) angeordnet ist.

2. Lager nach Anspruch 1, **dadurch gekennzeichnet, dass** jeder der beiden Stirnseiten des Lagerrings (5, 6) gegenüberliegend je eine Ringanode (8, 10) angeordnet ist.

3. Lager nach Anspruch 1 oder 2, **dadurch gekennzeichnet, dass** die Ringanode (8, 10, 18) aus oxidbeschichtetem Titan gebildet ist.

4. Lager nach einem der Ansprüche 1 bis 3, **dadurch gekennzeichnet, dass** die Fremdstromquelle eine auch bei Stillstand der Welle ununterbrochene Stromversorgung umfasst.

5. Lager nach einem der Ansprüche 1 bis 4, **dadurch gekennzeichnet, dass** eine Referenzelektrode (14) vorgesehen ist.

6. Lager nach einem der Ansprüche 1 bis 5, **dadurch gekennzeichnet, dass** der Lagerring (5, 6) eine elektrisch isolierende Schicht (16, 17; 27, 28) aufweist.

7. Lager nach einem der Ansprüche 1 bis 6, **dadurch gekennzeichnet, dass** der Lagerring (5) mit einem weiteren Lagerring (6) elektrisch leitend verbunden ist.

8. Lager nach einem der Ansprüche 1 bis 7, **dadurch gekennzeichnet, dass** mit dem Lagerring (5, 6), eine Opferanode (31) in elektrisch leitenden Kontakt verbunden ist.

9. Lager nach einem der Ansprüche 1 bis 8, **dadurch gekennzeichnet, dass** der Lagerring (5, 6) eine korrosionshemmende Beschichtung (29, 30) aufweist.

10. Lager nach einem der Ansprüche 1 bis 9, **dadurch gekennzeichnet, dass** ein Dichtelement (20, 22) vorgesehen ist.

## Claims

1. Bearing, comprising a bearing ring (5, 6) with a cathodic corrosion-protection device,
**characterized**
**in that** the bearing ring (5, 6) is connected as the cathode of an external current source, and
**in that** the anode (8, 10) of the external current source is arranged at a distance from the bearing ring (5, 6), and
**in that** the anode (8, 10) is designed as a ring anode which is arranged on a support ring (12, 13).

2. Bearing according to Claim 1, **characterized in that** each one of the two end sides of the bearing ring (5, 6) is arranged opposite a respective ring anode (8, 10).

3. Bearing according to Claim 1 or 2, **characterized in that** the ring anode (8, 10, 18) is made of oxide-coated titanium.

4. Bearing according to one of Claims 1 to 3, **characterized in that** the external current source comprises a power supply that is uninterrupted even when the shaft is stopped.

5. Bearing according to one of Claims 1 to 4, **characterized in that** a reference electrode (14) is provided.

6. Bearing according to one of Claims 1 to 5, **characterized in that** the bearing ring (5, 6) has an electrically insulating layer (16, 17; 27, 28).

7. Bearing according to one of Claims 1 to 6, **characterized in that** the bearing ring (5), is electrically connected to another bearing ring (6).

8. Bearing according to one of Claims 1 to 7, **characterized in that** the bearing ring (5, 6) is electrically connected to a sacrificial anode (31).

9. Bearing according to one of Claims 1 to 8, **characterized in that** the bearing ring (5, 6) has a corrosion-inhibiting coating (29, 30).

10. Bearing according to one of Claims 1 to 9, **characterized in that** a sealing element (20, 22) is provided.

## Revendications

1. Palier, comprenant une bague de palier (5, 6) avec un dispositif de protection anticorrosion et cathodique, **caractérisé en ce que**
la bague de palier (5, 6) est montée en tant que cathode d'une source de courant externe ; et
**en ce que** l'anode (8, 10) de la source de courant externe est disposée à distance de la bague de palier (5, 6) ; et
**en ce que** l'anode (8, 10) se présente sous la forme d'une anode annulaire qui est disposée au niveau d'une bague de support (12, 13).

2. Palier selon la revendication 1, **caractérisé en ce qu'**une anode annulaire (8, 10) est disposée respectivement en vis-à-vis de chacune des deux faces frontales de la bague de palier (5, 6).

3. Palier selon la revendication 1 ou 2, **caractérisé en ce que** l'anode annulaire (8, 10, 18) est conçue en titane avec un revêtement d'oxyde.

4. Palier selon l'une des revendications 1 à 3, **caractérisé en ce que** la source de courant externe comprend une alimentation ininterrompue en courant, y compris lorsque l'arbre est à l'arrêt.

5. Palier selon l'une des revendications 1 à 4, **caractérisé en ce qu'**une électrode de référence (14) est prévue.

6. Palier selon l'une des revendications 1 à 5, **caractérisé en ce que** la bague de palier (5, 6) présente une couche (16, 17 ; 27, 28) ayant des propriétés électriquement isolantes.

7. Palier selon l'une des revendications 1 à 6, **caractérisé en ce que** la bague de palier (5) est reliée à une autre bague de palier (6) de manière à assurer une conductivité électrique.

8. Palier selon l'une des revendications 1 à 7, **caractérisé en ce qu'**une anode réactive (31) est reliée à la bague de palier (5, 6) en exerçant un contact de manière à assurer une conductivité électrique.

9. Palier selon l'une des revendications 1 à 8, **caractérisé en ce que** la bague de palier (5, 6) présente un revêtement (29, 30) ayant des propriétés inhibitrices de la corrosion.

10. Palier selon l'une des revendications 1 à 9, **caractérisé en ce qu'**un élément d'étanchéité (20, 22) est prévu.
